# FASCICULE DE BREVET EUROPEEN

(11) **EP 2 572 874 B1**
(45) Date de publication et mention de la délivrance du brevet: **16.07.2014**
(21) Numéro de dépôt: 12185450.9
(22) Date de dépôt: 21.09.2012
(51) Int. Cl.: B32B 5/02, B32B 5/22, B32B 27/12, B32B 27/40, B32B 7/04, B32B 7/12, B32B 3/08

(54) **Composites, leur procédé de préparation et les voiles de vol les comprenant**
Verbundstoffe, ihr Herstellungsverfahren und Flugsegel, die sie umfassen
Composites, method for preparing same and gliders comprising the same

(30) Priorité: 21.09.2011 FR 1158412
(43) Date de publication de la demande: 27.03.2013
(73) Titulaire: Porcher Industries, 38300 Badinières (FR)
(72) Inventeur: Veran, Stéphane, 73100 AIX LES BAINS (FR)
(74) Mandataire: Colombet, Alain André

(56) Documents cités:
- EP-A1- 0 475 083
- EP-A1- 1 114 771
- WO-A1-2005/102690
- FR-A3- 2 775 656
- US-A- 4 708 080
- US-A1- 2004 188 567

## Description

L'invention concerne de nouveaux composites, notamment pour la préparation de voile, par exemple voiles de vol, leur procédé de préparation et les voiles, par exemple voiles de vol, obtenues.

Dans le domaine des voiles de vol, par exemple voile de parapente, les fabricants de tissus cherchent depuis longtemps à combiner diverse propriétés telles que notamment légèreté, performance mécanique, tenue au vieillissement et compacité. Ils recherchent pour cela à disposer au départ d'un tissu léger, résistant, souple, pour notamment limiter le marquage au pli, et d'épaisseur réduite. Il reste aujourd'hui difficile de disposer d'un tissu présentant toutes ces propriétés optimisées.

Pour la conception de voiles de vol, il est notamment habituel d'utiliser des textiles qui sont réalisés à partir de fils polyamide ou polyester et sont enduits à l'aide de compositions polymère, en général silicone, mélamine/formol, polyuréthane ou acrylique. La combinaison de ces deux matériaux permet de conférer les propriétés mécaniques (e.g. résistance à la déchirure, stabilité dimensionnelle) et de porosité requises pour l'application. Cependant, les tissus enduits présentent une certaine rigidité et ne présentent pas une bonne tenue au vieillissement. De plus, ces textiles peuvent présenter une mémoire ou marquage au pli (trait blanc au niveau du pli). Par ailleurs, les tissus étant réalisés classiquement par l'entrecroisement de fils de chaîne et de fils de trame, les pièces de tissu enduites et confectionnées pour former la voile de parapente présentent un problème récurrent de ce que l'on appelle l'allongement dans le biais, c'est-à-dire selon une direction inclinée par rapport aux directions de chaîne et de trame. Dans cette direction, les fils constituant le tissu de base ne confèrent pas la résistance à l'allongement requise, d'où l'emploi usuel d'une enduction qui apporte de la raideur et de la résistance à l'allongement dans le biais. Cette enduction a cependant des inconvénients qui sont notamment la rigidification du tissu enduit, la diminution de la résistance à la déchirure, l'augmentation de poids, l'augmentation du marquage au pli.

Au surplus, les voiles de parapentes sont dotées de fils de suspente dont les efforts au niveau des parties de la voile auxquelles ces fils sont rattachés, doivent être repris. Il est d'usage de disposer d'un certain nombre de ces fils de suspente afin de répartir ces efforts. Or, ces fils de suspente ont une incidence directe sur la traînée et donc les performances de l'aile. Les tissus enduits actuellement utilisés ne permettent pas de réduire de manière significative le nombre de fils de suspente en raison des efforts trop importants qu'une telle réduction ferait porter aux parties de l'aile auxquelles ils sont rattachés.

Le document EP 1 114 771 décrit un composite comportant deux films de nature polymérique non précisée. Ce composite est utilisé pour fabriquer une voile.

Un objectif de la présente invention est de fournir un composite qui soit léger, souple, résistant mécaniquement (résistance à la déchirure, résistance à l'allongement) et pliable, qui puisse être employé pour la réalisation de voiles, par exemple de voiles de vol.

Un autre objectif de l'invention est de fournir un tel composite pour lequel l'allongement selon la direction des efforts ou des contraintes est réduit.

Un autre objectif de l'invention est de fournir un tel composite qui présente des propriétés de souplesse intéressantes.

Un autre objectif de l'invention est de fournir un tel composite qui ne présente pas ou très peu de mémoire ou marquage au pli.

Un autre objectif de la présente invention est de fournir un tel composite présentant une bonne tenue au vieillissement et notamment conservant une bonne stabilité à l'allongement selon la direction des efforts.

Un autre objectif encore de la présente invention est de fournir un tel composite permettant de diminuer le nombre de fils de sustente dans les voiles de vol.

Un autre objectif encore de la présente invention est de fournir une voile, par exemple voile de vol, présentant toutes ces propriétés.

Ces objectifs, ainsi que d'autres, sont remplis par l'objet de l'invention qui est un composite comportant deux films polyuréthane (ci-après films PU), identiques ou différents, liés l'un à l'autre (par exemple contrecollés ou contre-soudés) et entre lesquels est interposée au moins une grille de renfort et au moins un fil textile de renfort orienté suivant au moins une ligne d'effort prédéterminées.

La combinaison des deux films et de la grille de renfort permet notamment d'obtenir un composite léger pour une résistance mécanique supérieure à celle des matériaux les plus performants utilisés pour les voiles de vol. Cette combinaison permet en outre d'obtenir un allongement, selon la direction des efforts, très performant et durable, généralement inférieur à 2%, de préférence à 1%, alors qu'il peut monter jusqu'à 10% pour les tissu enduit par du polyuréthane après vieillissement. Ainsi, les composites selon l'invention, d'une part sont durablement souples, d'autre part ne voient pas l'allongement croître avec le temps contrairement aux tissus enduits de l'état de la technique qui, raides au départ, s'assouplissent avec le temps et perdent leur résistance à l'allongement dans le biais.

Suivant un mode de réalisation, les deux films PU du composite selon l'invention sont réalisés dans le même matériau, c'est-à-dire ils sont identiques en composition. Suivant un autre mode de réalisation, les deux films PU sont différents dans leur composition. Suivant un autre mode de réalisation, les deux films PU sont de même composition, mais d'épaisseurs différentes. Suivant un autre mode de réalisation, l'un des deux films PU présente un aspect particulier, par exemple comporte une décoration ou un dépôt d'aluminium ou autre revêtement métallique, notamment obtenu par les techniques sous vide usuelles.

Les films polyuréthane sont des films de polyuréthane ou des films à base de polyuréthane. Par film à base de polyuréthane, on entend un film qui comprend par exemple du polyuréthane et au moins un autre constituant, par exemple au moins un autre monomère ou au moins un autre polymère. Ces films à base de polyuréthane sont généralement des copolymères.

De tels films à base de polyuréthane sont notamment des copolymères de polyuréthane avec au moins un autre polymère notamment de type polyéther et/ou polyamide. Ces copolymères sont de préférence des copolymères blocs. A titre d'exemple non limitatif on peut citer les copolymères polyuréthane-bloc-polyéther, les copolymères polyuréthane-bloc-polyamide ou les copolymères polyuréthane-bloc-polyéther-bloc-polyamide.

Un polyuréthane comporte une partie raide (isocyanate) et une partie souple (polyol). Le ratio entre ces deux composants permet d'obtenir un polymère plus ou moins raide.

Par isocyanate, on entend à la fois un isocyanate et un polyisocyanate, seul ou en mélange avec un ou plusieurs autres isocyanates et/ou polyisocyanates. Le terme « isocyanate » doit être compris comme regroupant les termes « isocyanate » et « polyisocyanate ».

Le polyuréthane est de préférence un polyuréthane à base polyéther ou polyester aromatique ou aliphatique. Ainsi, le polyuréthane comporte une partie polyol de type polyéther ou polyester et une partie isocyanate aromatique ou aliphatique (linéaire ou ramifié).

Dans un mode de réalisation particulier, le polyuréthane est un polyuréthane base polyéther aromatique.

Dans un autre mode de réalisation, le polyuréthane est un polyuréthane base polyéther aliphatique.

Dans un autre mode de réalisation, le polyuréthane est un polyuréthane base polyester aliphatique.

De manière générale, l'homme du métier connaît bien le domaine des polyuréthanes et est en mesure de proposer des compositions de films conformes à l'invention.

Egalement à titre d'exemple non limitatif, l'épaisseur de chacun des films PU est typiquement de l'ordre de la dizaine de micromètres, par exemple comprise entre 5 et 50 µm, de préférence entre 5 et 25 µm.

De préférence, les films PU présentent un allongement à rupture élevé, notamment égal ou supérieur à 100 %, de préférence compris entre 150 et 200% (mesuré selon la norme ISO 527-3).

De préférence, les films PU présentent un module élastique compris entre 10 et 100, de préférence entre 10 et 40 MPa.

Au contraire, des films de polyester, également utilisés pour préparer des composites similaires à ceux de l'invention, présentent un allongement à la rupture faible, généralement inférieur à 10 % et sont relativement raides, avec un module élastique élevé, généralement supérieur à 3000 MPa. Ainsi, les films PU de l'invention sont beaucoup plus souples que les films polyester et permettent d'obtenir un complexe non cassant et ne présentant pas de marquage au pli.

De façon avantageuse, le poids de chacun des films PU est compris entre 5 et 25 g/m², de préférence entre 8 et 20 g/m², par exemple entre 10 et 15 g/m².

Les autres éléments constitutifs du composite notamment grille et fils de renfort), placés entre les deux films PU, sont conformés pour permettre aux deux films PU de venir au contact l'un de l'autre sur une certaine surface. Cette surface est suffisante pour permettre une liaison des deux films PU entre eux, sans interposition des autres éléments constitutifs sur toute la surface. En d'autres termes, selon une caractéristique de l'invention, les films PU sont liés l'un à l'autre (par exemple contrecollés ou contre-soudés).

La contre-soudure est un mode de réalisation optimal dans lequel il n'y a pas interposition d'un adhésif entre les faces de films PU au contact l'un de l'autre. Dans un mode de réalisation particulièrement préféré, les films PU sont donc contre-soudés, l'un au contact de l'autre.

Au sein du composite, la grille a pour fonction de renforcer mécaniquement les films PU accolés, typiquement en augmentant la résistance du composite à la déchirure. Plus généralement, l'entrecroisement des fils confère à la grille des propriétés de résistance mécanique qui sont différentes selon la direction dans le plan de la grille, en fonction de la géométrie du motif élémentaire de cet entrecroisement.

La grille constituant le composite selon l'invention peut comprendre un assemblage de fils rectilignes agencés les uns par rapport aux autres en répétant, régulièrement dans le plan de la grille, un motif élémentaire préétabli.

Dans un mode de réalisation, ce motif comprend des fils se croisant avec un angle compris entre 45 et 90°, en général à 45° et/ou à 90°. Ce motif peut par exemple consister en un parallélépipède complété d'une, de préférence de ses deux diagonales. Ce motif peut par exemple consister en un losange complété d'une de ses diagonales ou de ses deux diagonales. Autrement dit, par répétition régulière du motif précité, dans les deux directions définies par le plan de la grille, la totalité de cette grille est obtenue. Ainsi, les différents fils constituant la grille sont positionnés les uns par rapport aux autres suivant une géométrie préétablie, aussi bien en orientation relative qu'en espacement relatif dans le plan de la grille.

Selon un mode de réalisation, deux grilles sont superposées. De préférence, ces grilles sont disposées de manière complémentaire, c'est-à-dire de manière à offrir à l'ensemble des fils orientés selon des directions différentes.

La ou les grilles de renfort ont pour rôle de base de conférer une tenue aux deux feuilles de PU réunies. La ou les grilles de renfort sont également susceptibles d'assurer en elles-mêmes ou de contribuer (avec les fils de renfort décrits infra) à reprendre les efforts exercés sur la voile. Ce rôle peut notamment être dévolu essentiellement à une partie des fils constitutifs d'une grille, par exemple les diagonales.

De préférence et à titre d'exemple non limitatif, les fils constitutifs de la grille sont réalisés en polyester, en aramide, en carbone, etc. Au sein de la même grille, des fils réalisés en des matériaux respectifs différents et avec des titres respectifs différents peuvent être mélangés.

De préférence, les fils de la grille sont entrecroisés à la façon d'un tissu avec certains des fils faisant fonction de fils de trame, tandis que les autres fils font fonction de fils de chaînes. En variante, les fils ne s'entrecroisent pas, mais se superposent, en étant répartis en au moins deux nappes superposées. Le cas échéant, les fils sont, à leurs entrecroisements ou à leurs croisements, collés ou soudés les uns aux autres. A titre d'exemple détaillé, l'homme du métier pourra consulter le document EP-A-1 111 114.

L'épaisseur de la grille est égale à l'épaisseur des fils pour l'essentiel de cette grille, exceptée dans les zones quasi ponctuelles où s'entrecroisent ou se croisent au moins deux des fils, en se chevauchant suivant la direction Z, zones dans lesquelles l'épaisseur de la grille est localement majorée au maximum d'autant de fois que le nombre de fils se chevauchant. A titre d'exemple non limitatif, l'épaisseur des fils, et donc l'épaisseur de la grille, hormis les zones de chevauchement de plusieurs fils, peut être de l'ordre de la centaine ou de quelques centaines de micromètres, voire davantage, notamment en fonction du titre des fils. Cette épaisseur peut ainsi être comprise entre 50 et 300 µm, de préférence entre 100 et 250 µm.

La grille peut par exemple être plate.

De façon avantageuse, le poids de la grille est compris entre 5 et 50 g/m², de préférence entre 10 et 30 g/m².

La grille présente une ouverture permettant aux deux films de PU d'entrer en contact entre eux sur une surface suffisante pour assurer leur accolement liant les deux films PU l'un à l'autre, notamment par contre-soudure ou contre-collage. On pourra donc faire varier l'ouverture de la grille dans certaines proportions, en gardant à l'esprit une surface de contact suffisante entre les deux films PU et l'emploi d'une grille apportant les propriétés attendues. De manière optimale, l'ouverture de la grille pourra aller de 2 à 20 mm, de préférence de 4 à 15 mm (dimension moyenne des côtés des ouvertures définies par la grille).

Le fil textile de renfort a pour fonction de transférer les efforts, les fils étant orientés suivant des lignes d'effort prédéterminées.

Dans un mode de réalisation, le ou les fils de renfort sont disposés suivant les lignes d'effort des suspentes. Ainsi, chacun des fils s'étend en longueur, dans le plan du composite de la voile, suivant une direction longitudinale propre, le cas échéant incurvé.

Les fils sont des fils individuels, dans le sens où, avant assemblage du composite ces fils sont mécaniquement indépendants les uns des autres.

Les fils comprennent, voire consiste en, un corps d'ensemble qui s'étend en longueur suivant une direction prédéterminée.

Dans un mode de réalisation, l'invention concerne donc une cloison interne (paroi inter-caisson) destinée à être reliée à au moins un fil de suspente ou comportant au moins un fil de suspente ou comportant au moins un point de fixation d'un fil de suspente. Dans ce mode de réalisation, la cloison est réalisée dans le composite selon l'invention et comporte au moins un fil de renfort destiné à reprendre les efforts issus du fil de suspente. Notamment, le au moins un fil de renfort s'étend depuis le point de fixation ou de contact avec le fil de suspente.

Dans un mode de réalisation, le fil de renfort a une section circulaire.

Dans un autre mode de réalisation, le fil de renfort présente une section transversale oblongue, c'est-à-dire une section transversale plus longue que large, dont la largeur, autrement dit l'épaisseur maximale (e) du fil lorsque ce dernier est considéré au sein du composite est inférieure à 0,06 fois, de préférence inférieure à 0,05 fois sa longueur maximale (ℓ), c'est-à-dire 0,06 fois, de préférence 0,05 fois, la largueur du fil lorsque ce dernier est considéré au sein du composite, étant entendu que la longueur du fil précité correspond à la dimension de ce fil selon sa direction longitudinale au sein du composite. Grâce à leur conformation plate, les fils de renfort individuels selon l'invention n'induisent pas de variation significative de l'épaisseur totale du composite, dans le sens où la faible variation de cette épaisseur, dans les zones où s'étend au moins un de ces fils, est accommodée par le reste du composite, notamment par les deux films polyuréthane, sans risque de délaminage entre ces films. Les fils plats ont également l'avantage de conférer au composite, et par conséquent à la voile ou éléments de voile (notamment cloison interne) comprenant ledit composite, une grande souplesse, en évitant de le rigidifier localement. De plus, le relief externe du composite, résultant de la présence des fils de renfort plats, est très peu prononcé, voire quasi-inexistant. Cela présente un avantage pour les voiles comprenant ce type de composite puisque cela ne crée que très peu, voire quasiment pas de résistance par frottement avec le vent. De surcroît, même dans les régions de la voile où se superposent deux voire davantage de fils de renfort plats l'épaisseur cumulée des constituants de la voile reste modérée : ainsi, la cohésion entre les différents fils de renfort et la grille est maintenue sans discontinuité de matière par les deux films contrecollés.

Le ou les fils textile de renfort sont agencés dans le composite de sorte que, en coupe transversale, la largeur du contour oblong de son corps d'ensemble s'étend selon la direction de superposition.

Ces fils dits « plats » ont l'avantage d'optimiser leur surface de contact avec les films PU et de diminuer l'épaisseur du composite.

De préférence, les fils textile de renfort comprennent un ensemble de filaments, lesdits filaments étant réalisés soit en une matière organique, notamment en aramide ; en polyamide ; en polyester, par exemple en polyester aromatique tel que le Vectran ® ; ou en polyéthylène, par exemple en polyéthylène haute densité (PEHD) ou en polyéthylène naphtale (PEN), tel que le Pentex ®; soit en une matière minérale, notamment en carbone.

Les fils de renfort présentent une résistance à la rupture adaptée, notamment comprise entre 50 et 800 N, selon la norme ISO 527-3, la valeur de résistance pouvant varier selon la nature de la matière organique et le titre du fil.

Avantageusement, le corps d'ensemble du fil est enduit à coeur et/ou extérieurement. Une enduction peut être prévue de manière interposée entre les filaments constitutifs du fil formant ainsi un liant de cohésion entre ces filaments.

Avantageusement, les filaments à la périphérie du corps d'ensemble peuvent être enduits, l'enduction formant ainsi une gaine d'enrobage du corps d'ensemble.

Ce liant et cette gaine participent avantageusement au maintien en place des filaments au sein du corps d'ensemble. De façon avantageuse, le liant a spécifiquement pour fonction de limiter, voire d'empêcher les infiltrations d'eau par capillarité dans le corps d'ensemble. La gaine permet quant à elle de faciliter l'utilisation du fil, notamment en permettant son bobinage et/ou en améliorant son intégration physico-chimique au sein du composite.

Le ou les matériaux d'enduction utilisés pour constituer le liant et la gaine sont identiques ou différents, de préférence identiques, et sont choisis parmi les polymères, notamment à base acrylique, polyuréthane ou polyéthylène. De préférence, ils sont choisis parmi les polyuréthanes base polyéther aliphatique ou aromatique. De préférence, ils sont de même nature, voire identiques aux films PU.

Le taux d'enduction du corps d'ensemble du fil de renfort, défini comme cent fois le rapport entre, d'une part, la différence entre le titre du fil enduit et le titre du fil non enduit, et, d'autre part, le titre du fil non enduit, est compris entre 5 et 100%. Il est de préférence inférieur à 50%, notamment dans le but de réduire le poids du composite et par conséquent de la voile comprenant ce composite.

De façon avantageuse, dans le cas où les filaments sont réalisés en aramide, le corps d'ensemble présente un ratio entre, d'une part, son titre exprimé en dTex, et, d'autre part, sa circonférence ou la longueur maximale de son contour oblong, exprimée en millimètres, dont la valeur est inférieure à 1 000, le cas échéant en présence de matière d'enduction à un taux d'enduction inférieur à 50%.

En pratique, divers procédés de fabrication d'un fil de renfort plat conforme à l'invention, sont envisageables par les spécialistes du domaine, sans sortir du cadre de la présente invention. A titre d'exemple, l'un de ces procédés consiste à partir d'un fil préexistant à section sensiblement circulaire, puis à lui faire subir une ou plusieurs opérations d'aplatissement, accompagnées le cas échéant d'opérations d'enduction, notamment d'encollage. Pour ce qui concerne l'enduction, l'homme du métier, à titre d'exemple détaillé, pourra se reporter au document US-A-2010/0089017. A titre d'alternative, le fil peut être fabriqué directement à partir des filaments, notamment en les agençant les uns par rapport aux autres pour obtenir la structure décrite plus haut. Dans tous les cas, on dispose d'un fil aplati ou plat, avantageusement à même d'être bobiné et stocké en vue de son utilisation ultérieure, en particulier pour fabriquer le composite de l'invention.

Suivant une caractéristique optionnelle, le composite comprend un tissu (tissu de renfort) placé à l'intérieur du composite, notamment au contact de l'un des films PU, e.g. entre la grille de renfort et l'un des films PU. Ce tissu est disposé par rapport à une partie seulement du composite, par exemple au niveau d'un bord ou d'un coin. Le tissu est destiné à renforcer localement le composite, par exemple au point d'accroche des suspentes ou pour former une partie permettant un assemblage cousu avec des tissus utilisés traditionnellement dans l'application envisagée, par exemple en parapente, notamment pour les cloisons diagonales, l'intrados, l'extrados, le bord d'attaque. Le tissu de renfort peut être de nature similaire à ceux habituellement utilisés dans l'application envisagée, par exemple des tissus de fils polyamide ou polyester, enduits à l'aide de compositions polymère, en général mélamine/formol, polyuréthane ou acrylique. Ces tissus peuvent être simplement écru (non traité, non enduit). Le tissu est rendu solidaire des autres composants du composite grâce à une colle adaptée, de façon préférée à base de PU. Il peut avoir été préalablement encollé avec une colle PU réactivable. Cet ajout de colle localisé ne provoquera pas une augmentation de poids significative du parapente.

Le composite selon l'invention peut également subir un traitement de protection contre les UV.

Le composite selon l'invention peut également présenter un revêtement de surface, notamment sur une face, qui sera souvent la face visible de l'extérieur une fois le composite mis en oeuvre au sein d'une voile. Ce revêtement peut être d'ordre décoratif et/ou de protection contre les UV. Dans un mode de réalisation, le composite est destiné à former le bord d'attaque d'une voile de parapente, et le composite comporte un revêtement réfléchissant, par exemple un revêtement aluminisé.

La présente invention concerne également une voile comprenant au moins un composite selon l'invention. De préférence la voile est une voile de vol

Par voile de vol on entend tout type de voile d'engin de vol, gonflable par le vent, par exemple voile de parapente, de parachute, de montgolfière, de kite-surf, de cerf-volant, de dirigeable, etc.

De manière générale, on peut définir dans une voile de parapente:
- son bord d'attaque qui représente la partie du profil aérodynamique de la voile entrant en premier en contact avec l'air ;
- son bord de fuite qui, dans le sens de l'écoulement de l'air représente la partie arrière, amincie, du profil aérodynamique d'une voile ;
- les cloisons (cloisons diagonales internes ou parois inter-caissons) délimitant chaque caisson formant la voile ;
- la partie extrados qui est la partie supérieure de la voile présentant une cambrure convexe ;
- la partie intrados qui est la partie interne de la voile plate ou présentant une cambrure concave ou légèrement concave ;
- les fils de suspente qui permettent de diriger la voile.

La présente invention concerne notamment une voile de parapente dont le bord d'attaque et/ou les cloisons sont des composites selon l'invention. De préférence, le bord d'attaque est un composite selon l'invention pour lequel le polyuréthane est un polyuréthane base polyester aliphatique. De préférence les cloisons sont des composites selon l'invention pour lesquels le polyuréthane est un polyuréthane base polyéther aromatique, voire aliphatique.

Dans un mode de réalisation, la voile de parapente possède un bord d'attaque formé d'un composite selon l'invention.

Dans un mode de réalisation, la voile de parapente possède des cloisons suspentées formées d'un composite selon l'invention, ainsi que cela a été décrit ci-dessus.

Dans un mode de réalisation, la voile de parapente possède un bord d'attaque en composite selon l'invention et des cloisons suspentées en composite selon l'invention. Les cloisons non suspentées peuvent être réalisées en un matériau classiquement utilisé, par exemple en tissu enduit. Ces cloisons peuvent aussi être réalisées en composite selon l'invention ne comprenant pas de fil textile de renfort.

L'intrados et l'extrados sont traditionnellement réalisés en tissu. On a décrit plus haut que l'on pourra coudre les parties en tissu aux parties en composite, notamment des parties composites comprenant l'insert de tissu de renfort conforme à l'invention.

Dans un mode de réalisation, la voile comprend des coupons de composite comportant du tissu de renfort formant des zones de liaison par couture et/ou des zones de fixation de suspentes.

Dans un mode de réalisation, l'intrados et/ou l'extrados peuvent être partiellement ou en totalité formés par un simple film PU, tel que décrit dans l'invention, par exemple de 30 à 40 g/m² ce film PU pouvant être soudé par échauffement avec le composite selon l'invention.. Notamment, la voile comportera alors un bord d'attaque en composite selon l'invention. Elle pourra aussi composter des cloisons en composite, y compris des cloisons en composite suspentées.

De manière avantageuse, les composites formant les cloisons sont perforés, de préférence microperforés.

De manière avantageuse, l'utilisation des composites selon l'invention dans les voiles permet de diminuer le nombre de fils de suspente. De préférence le nombre de fils de suspente par cloison renforcée par des fils de renfort et suspenté est compris entre 2 et 4, il est de préférence de 2 ou 3.

De manière avantageuse, l'utilisation des composites à fils de renfort pour les cloisons suspentées de voile permet de diminuer le nombre de points d'accroche des suspentes et donc de limiter la traînée en vol.

La présente invention concerne également un procédé de préparation d'un composite selon l'invention.

Le composite selon l'invention peut être préparé de la manière suivante :
(a) on dispose d'un premier film PU ;
(b) on dépose au moins un fil technique de renfort ;
(c) on dépose une grille de renfort;
(d) on dépose ensuite un second film PU sur la grille.

Les étapes (b) et (c) peuvent être inversées.

Entre les étapes (c) et (d), par exemple, on peut ajouter une étape d'insertion d'un tissu de renfort.

Une variante de ce procédé consiste à pré-positionner la grille et les fils textile de renfort entre les films PU, puis de contraindre l'accolement de ces films par exemple en créant une dépression entre eux.

Dans chacun de ces procédés les films PU sont maintenus entre eux par tout moyen approprié, par exemple par collage, la colle pouvant être apportée extérieurement ou être imprégnée à l'un et/ou l'autre des films. Une colle PU est avantageusement utilisée. De préférence, les films PU sont maintenus entre eux par thermo-soudage, le procédé comprenant donc une étape supplémentaire de chauffage sous pression permettant un thermo-soudage des films de polyuréthane. La soudure peut aussi être assurée par ultrasons ou tout autre moyen permettant d'assurer un échauffement suffisant pour générer la soudure.

L'invention sera mieux comprise à la lecture de la description qui va suivre, donnée uniquement à titre d'exemple et faite en se référant aux dessins sur lesquels :
- la figure 1 est une vue schématique en perspective d'un parapente ;
- la figure 2 est une vue schématique en perspective éclatée, montrant les constituants du composite;
- la figure 3 est une coupe schématique selon le plan III de la figure 2 ;
- la figure 4 est une vue schématique, à plus grande échelle, de la zone cerclée IV sur la figure 3 ;
- la figure 5 représente l'évolution de l'allongement selon la direction de contrainte sous 3 Lbs (soit 1,36 kg) en fonction du temps du flotteur pour un tissu enduit polyuréthane et pour un composite selon l'invention.

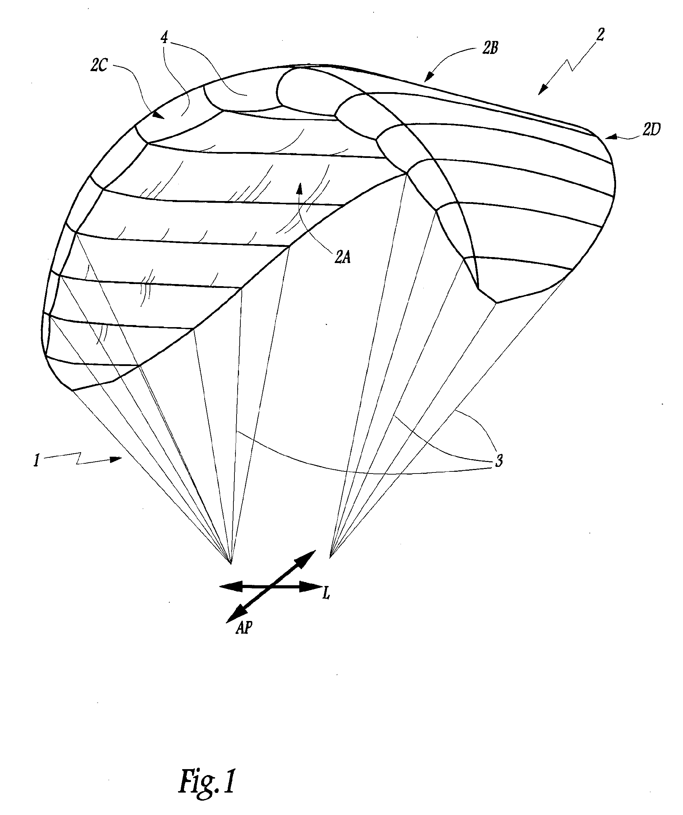

La figure 1 est une vue schématique en perspective d'un parapente (1) comprenant une voile (2) et des fils de suspentes (3). La voile (2) présente un intrados (2A) et un extrados (2B). A l'avant de la voile, l'extrados (2B) présente un bord d'attaque (2C). Entre l'intrados et l'extrados sont délimités des caissons antéro-postérieurs (2D), qui débouchent vers l'avant sur le bord d'attaque (2C) et qui sont séparés deux à deux, suivant la direction latérale, par des parois inter-caissons ou cloisons (4).

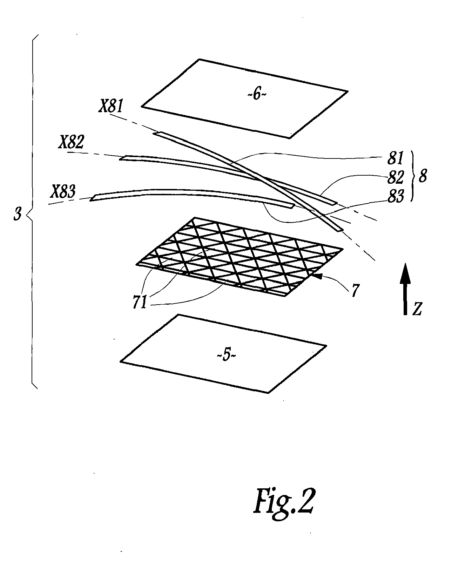

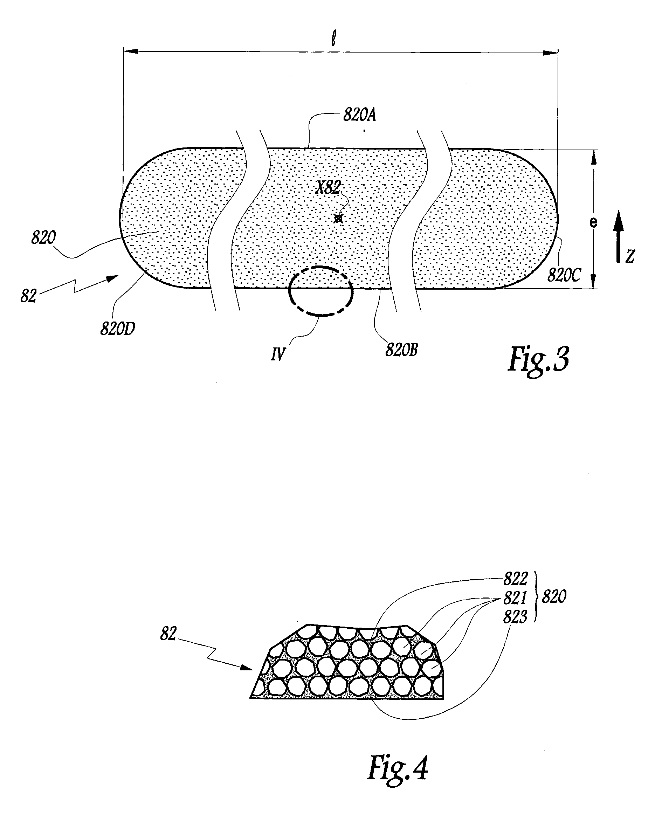

Comme bien visible sur la figure 2, le composite comprend au moins 4 couches superposées, à savoir deux films polyuréthanes opposés 5 et 6, constituant les deux faces opposées du composite, ainsi que, entre ces films 5 et 6, une grille 7 et des fils textiles de renfort sous la forme d'une couche 8 constituée d'une pluralité de fils individuels, qui sont au nombre de trois dans l'exemple représenté à la figure 3, en étant respectivement référencés 81, 82 et 83.. Sur la figure 2, on note Z, la direction rectiligne correspondant à l'épaisseur du composite : ainsi, se succèdent suivant cette direction Z de superposition, le film 5, la grille 7, la couche 8 des fils 81, 82 et 83 et le film 6. A l'état assemblé du composite, alors que ce composite est étendu à plat sur une surface plane, les différentes couches constitutives du composite s'étendent globalement dans un plan perpendiculaire à la direction Z.

Lorsque le composite est compris dans une voile, il doit bien être entendu qu'il présente globalement une géométrie tridimensionnelle, de forme plus ou moins bombée lorsque la voile est en service.

La grille 7 comprend, voire comme dans l'exemple de la figure 2, consiste en un assemblage de fils rectilignes 71 agencés les uns par rapport aux autres en répétant, régulièrement dans le plan de la grille 7, un motif élémentaire préétabli. Ainsi, dans l'exemple de réalisation considéré sur la figure 2, ce motif consiste en un losange complété d'une de ses diagonales. Autrement dit, par répétition régulière du motif précité, dans les deux directions définies par le plan de la grille 7, la totalité de cette grille est obtenue. Ainsi, les différents fils 71 constituant la grille 7 sont positionnés les uns par rapport aux autres suivant une géométrie préétablie, aussi bien en orientation relative qu'en espacement relatif dans le plan de la grille.

Dans le cadre d'une voile comprenant un composite selon l'invention, chacun des fils 81, 82 et 83 s'étend en longueur, dans le plan de la voile, suivant une direction longitudinale propre X81, X82, X83, le cas échéant incurvé, comme représenté sur la figure 2. De manière connue en soi, chacun de ces fils 81, 82, 83 suit ainsi, suivant sa direction longitudinale X81, X82, X83, une trajectoire préfixée, le long de laquelle il a été prédéterminé, notamment par des calculs préalables ad hoc, que des contraintes significatives vont s'appliquer à la voile lorsque cette voile est en service. Ainsi, les contraintes appliquées au composite formant la voile sont alors supportées, pour l'essentiel, voire en quasi-totalité, par un ou plusieurs des fils 81, 82 et 83, qui sont dimensionnés en conséquence.

Bien entendu, on comprend que, en pratique, le nombre total de fils de renfort, similaires aux fils 81, 82 et 83, au sein du composite est généralement bien plus grand que trois.

Ainsi, le fil 82 comprend, voire, comme dans l'exemple considéré ici, consiste en un corps d'ensemble 820 (figure 3) qui s'étend en longueur suivant la direction X82, en étant sensiblement centré sur un axe matérialisant géométriquement la direction X82. Comme bien visible sur la figure 3, le fil 82 ne présente pas, en coupe transversale à sa direction longitudinale X82, un profil circulaire ou même proche d'un cercle, comme on pourrait s'y attendre pour un fil textile de renfort traditionnellement utilisé dans le domaine concerné ici. Au contraire, la section transversale du corps d'ensemble 820 du fil 82, c'est-à-dire sa section dans un plan géométrique perpendiculaire à sa direction longitudinale X82, présente une forme oblongue, c'est-à-dire une forme significativement plus longue que large. En considérant le fil 82 suivant son volume d'ensemble, cela revient à dire que le corps 820 présente une largeur significativement plus grande que son épaisseur, étant convenu que l'épaisseur du fil est sa dimension considérée dans la direction Z tandis que sa largeur est sa dimension qui, dans le plan du composite, est perpendiculaire à la direction longitudinale X82. Ainsi, sur la figure 2, on note ℓ la longueur de la section oblongue corps d'ensemble 820 du fil 82, tandis qu'on note e la largeur de cette section oblongue, respectivement en référence à la largeur et à l'épaisseur du fil 82.

Ainsi, le fil 82 peut être qualifié de fil plat ou aplati, ce qui, au sens du présent document, consiste à prévoir que le rapport e/ℓ entre son épaisseur et sa largeur, c'est-à-dire le rapport entre la largeur maximale et la longueur de la section oblongue de son corps d'ensemble 820 est inférieur à 0,06, voire de préférence inférieur à 0,05. En pratique, la forme plate ou aplatie du corps d'ensemble 820 du fil 82 est liée à la constitution de ce corps d'ensemble. En effet, comme représenté schématiquement sur la figure 4, le corps 820 n'est pas une pièce monobloc, mais résulte de l'agglutination d'un grand nombre de filaments élémentaires 821 : chacun de ces filaments 821 peut être individuellement dissocié des autres et, en ce sens, peut donc être qualifié de monofilament. Individuellement, on peut considérer que chacun de ces filaments 821 présente, en coupe transversale à l'axe X82, une section sensiblement circulaire, avec un diamètre de l'ordre de la dizaine de micromètres, en particulier compris entre 3 et 30 µm. Lorsqu'on considère ces filaments 821 à l'état agglutiné au sein du corps d'ensemble 820, ces filaments 821 sont agencés les uns par rapport aux autres pour conférer à ce corps d'ensemble 820 la section oblongue décrite plus haut, étant remarqué que plusieurs centaines, voire un ou quelques milliers de filaments, autrement dit au moins deux cents, voire au moins mille filaments, sont ainsi agglutinés pour former le corps d'ensemble 820. Il en résulte que l'épaisseur e du corps d'ensemble 820 est de l'ordre du dixième de millimètres, ce qui revient à dire que, suivant la direction Z, une dizaine de filaments 821 se succèdent sur l'épaisseur du corps d'ensemble 820. Des exemples quantitatifs plus précis seront donnés plus loin.

Avantageusement, suivant le mode de réalisation représenté sur les figures 3 et 4, le corps d'ensemble 820 du fil 82 est encollé, à coeur et/ou extérieurement. Plus précisément, comme représenté schématiquement sur la figure 4 une matière d'enduction est prévue de manière interposée entre les filaments 821, en formant ainsi un liant 822 de cohésion entre ces filaments. De plus, une matière d'enduction est prévue de manière enveloppante autour des filaments 821 situés à la périphérie du corps d'ensemble 820, de manière à former une gaine 823 d'enrobage de ce corps 820.

En pratique, diverses géométries sont envisageables pour la section transversale du corps d'ensemble 820, du moment que ces géométries présentent un contour oblong. Ainsi, dans le mode de réalisation illustré schématiquement à la figure 3, le contour de la section transversale du corps d'ensemble 820 présente deux segments opposés 820A et 820B sensiblement plats, entre lesquels est définie la largeur de son contour, autrement dit, l'épaisseur e du corps d'ensemble 820. Cela revient à dire que les segments 820A et 820B s'étendent sensiblement à la perpendiculaire de la direction Z, en étant écartés de la distance e. Les extrémités respectives de ces segments plats 820A et 820B sont reliés deux à deux par deux segments opposés 820C et 820D du contour transversal du corps d'ensemble 820, ces segments 820C et 820D étant convexes, notamment en reliant continûment les segments plats 820A et 820B. Bien entendu, les segments 820A et 820B ne sont pas rigoureusement plats, dans le sens où ils sont définis par une succession des filaments 821 situés à la périphérie du corps d'ensemble 820, le cas échéant en étant recouverts par une portion de la gaine 823. Cette forme de réalisation a l'avantage que l'épaisseur e du corps d'ensemble 820 présente une valeur sensiblement constante sur l'essentiel de la largeur de ce corps, notamment sans présenter, suivant la direction de la largeur du corps 820, une valeur maximale locale. Cela revient à dire que la forme plate ou aplatie selon l'invention est ainsi optimisée.

Ceci étant dit, à titre de variante non représentée, le contour oblong de la coupe transversale du corps d'ensemble 820 peut correspondre sensiblement à une ellipse ou, plus généralement, à un contour sensiblement elliptique, qui est centré sur un axe matérialisant géométriquement la direction X82 et dont le petit axe s'étend suivant la direction Z. Dans ce cas, le rapport entre la largeur maximale et la longueur maximale de ce contour correspond au rapport entre le petit rayon et le grand rayon de la forme elliptique. Plus généralement, d'autres géométries que celles évoquées ci-dessus sont envisageables pour le contour oblong transversal du corps d'ensemble 820. Suivant un aspect avantageux, dans le cas où les filaments 821 sont en aramide, le ratio entre le titre du fil 82 et la largeur ℓ de son corps d'ensemble 820 est prévu inférieur à une valeur prédéterminée. Cela revient, pour un titre de fil donné, à prévoir une épaisseur e du corps d'ensemble 820 suffisamment petite pour que les filaments 821 de ce corps se répartissent sur une grande largeur ℓ. Ainsi, le ratio précité est avantageusement prévu inférieur à 1 000 (mille), en exprimant le titre du corps d'ensemble 820 non enduit en dTex et en exprimant sa largeur ℓ, c'est-à-dire la longueur de son contour oblong, en millimètres. Le cas échéant, en présence de matière d'enduction, sous la forme du liant 822 et/ou de la gaine 823, la valeur du ratio précité reste pertinente à condition que le taux d'enduction soit inférieur à 50%.

### Exemple 1 : Etude comparative de l'évolution selon la direction de contrainte sous 3 lbs (soit 1,36 kg) en fonction du temps de flotteur d'un tissu enduit polyuréthane et d'un composite selon l'invention

Le tissu est constitué de fils polyamide (55 fils/cm en chaîne et 45 en trame). Il s'agit d'une armure rip-stop. Le poids est de 45 g/m² (7 g/m² d'enduction polyuréthane - résine mélamine formaldéhyde).

Le composite comporte deux films de 25 µm base polyéther aromatique, une grille polyester losange, et des fils d'aramide 3300 dtex, épaisseur 100 µm, encollés avec 30% de colle (titre final 4300 dtex), 4 fils par 5 cm, ces fils sont parallèles les uns aux autres et sont disposés de façon qu'ils passent par le sommet des losanges. L'effort étant appliqué dans la direction des fils.

Le tissu est caractérisé par une raideur dans le biais. Le biais sens chaîne est la direction à 45° par rapport aux fils de chaîne. Le biais sens trame est la direction à 45° par rapport aux fils de trame. On mesure l'allongement en % sous une force de 3 pounds (Lbs, soit 1,36 kg) appliquée dans le biais pour le tissu et selon la direction des fils d'aramide pour le composite. Cet allongement caractérise la raideur du tissu dans le biais. La norme utilisée est la NF EN ISO 13934-1 : on réalise des éprouvettes de largeur 50 mm et de longueur 300 mm. Les mords du dynamomètre sont éloignés de 200 mm et la mesure est réalisée à une vitesse de 100 mm/min.

Les mesures sont réalisées sur un tissu neuf (c'est-à-dire un tissu non soumis à un vieillissement) et sur des tissus vieillis. Le vieillissement du tissu est réalisé en faisant flotter à grande vitesse le tissu fixé sur un montage de type moulin (montage à 4 pales, le tissu étant fixé au bout d'une des pales).

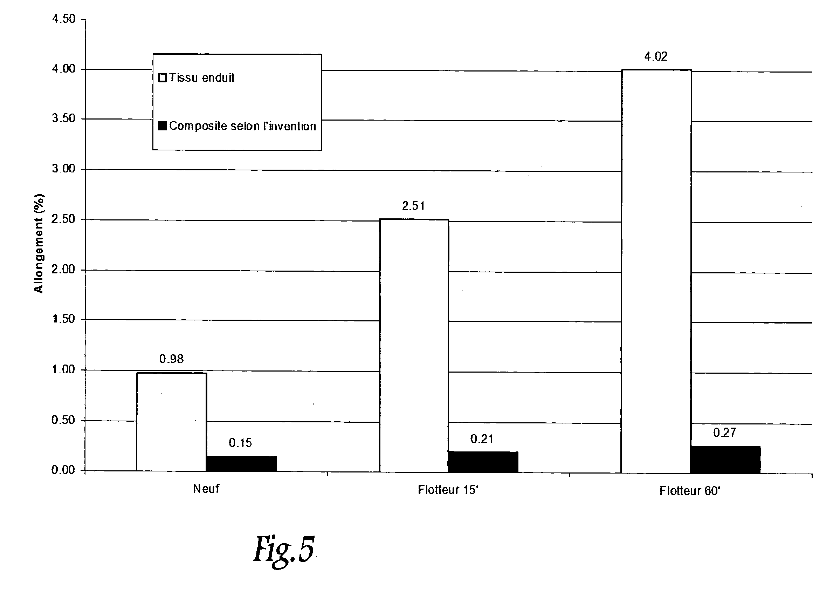

Les résultats sont présentés à la figure 5. Les résultats montrent que le composite selon l'invention présente un allongement dans le biais bien inférieur au tissu enduit de l'état de la technique, même après vieillissement. De plus, les résultats montrent que l'allongement ne varie pas avec le vieillissement du composite.

## Revendications

1. Composite comportant deux films de polyuréthane, identiques ou différents, qui sont liés l'un à l'autre et entre lesquels est interposée une grille de renfort et au moins un fil textile de renfort orienté suivant au moins une ligne d'effort prédéterminée.

2. Composite selon la revendication 1, dans lequel le polyuréthane est un polyuréthane à base polyéther aromatique ou aliphatique.

3. Composite selon la revendication 1, dans lequel le polyuréthane est un polyuréthane à base polyester aliphatique.

4. Composite selon l'une des revendications précédentes, dans lequel les films PU sont liés l'un à l'autre par contre-soudure.

5. Composite selon l'une des revendications précédentes, dans lequel les films PU sont liés l'un à l'autre par contre-collage.

6. Composite selon l'une des revendications précédentes, dans lequel la grille a une ouverture de grille allant de 2 à 20 mm, de préférence de 4 à 15 mm.

7. Composite selon l'une des revendications précédentes, dans lequel un tissu de renfort est placé à l'intérieur du composite et disposé par rapport à une partie du composite.

8. Composite selon la revendication précédente, dans lequel le tissu est collé à l'intérieur du composite par une colle PU.

9. Voile comprenant au moins un composite selon l'une quelconque des revendications précédentes.

10. Voile selon la revendication 9, consistant en une voile de vol.

11. Voile de parapente comprenant un bord d'attaque consistant en un composite selon l'une quelconque des revendications 1 à 8 et/ou comprenant des cloisons internes consistant en un composite selon l'une quelconque des revendications 1 à 8.

12. Voile de parapente comprenant un bord d'attaque consistant en un composite selon l'une quelconque des revendications 1 à 8 et comprenant des cloisons internes suspentées consistant en un composite selon l'une quelconque des revendications 1 à 8.

13. Voile selon l'une des revendications 9 à 12, comprenant des cloisons suspentées réalisées en composite et comprenant entre 2 et 4 fils de suspentes par cloison suspentée, de préférence 2 ou 3.

14. Voile selon l'une des revendications 9 à 13, comprenant un extrados et/ou un intrados formé en tout ou partie d'un film PU.

15. Voile selon l'une des revendications 9 à 14, comprenant des coupons de composite comportant du tissu de renfort formant des zones de liaison par couture et/ou des zones de fixation de suspentes.

## Patentansprüche

1. Verbundmaterial, das zwei identische oder unterschiedliche Folien aus Polyurethan umfasst, die miteinander verbunden sind und zwischen denen ein Verstärkungsgitter und mindestens ein Verstärkungstextilfaden angeordnet sind, wobei der Textilfaden gemäß mindestens einer vorbestimmten Beanspruchungslinie orientiert ist.

2. Verbundmaterial nach Anspruch 1, bei dem das Polyurethan ein Polyurethan auf der Basis eines aromatischen oder aliphatischen Polyäthers ist.

3. Verbundmaterial nach Anspruch 1, bei dem das Polyurethan ein Polyurethan auf Basis eines aliphatischen Polyesters ist.

4. Verbundmaterial nach einem der vorhergehenden Ansprüche, bei dem die PU-Folien durch Gegen-Schweißen miteinander verbunden sind.

5. Verbundmaterial nach einem der vorhergehenden Ansprüche, bei dem die PU-Folien miteinander durch Gegen-Kleben verbunden sind.

6. Verbundmaterial nach einem der vorhergehenden Ansprüche, bei dem das Gitter eine Gitteröffnung aufweist, die von 2 bis 22 mm, vorzugsweise von 4 bis 15 mm geht.

7. Verbundmaterial nach einem der vorhergehenden Ansprüche, bei dem ein Verstärkungsgewebe im Inneren des Verbundmaterials platziert ist und in Bezug auf einen Teil des Verbundmaterials angeordnet ist.

8. Verbundmaterial nach dem vorhergehenden Anspruch, bei dem das Gewebe im Inneren des Verbundmaterials durch einen PU-Kleber verklebt ist.

9. Segel, mindestens ein Verbundmaterial nach einem beliebigen der vorherhegenden Ansprüche umfassend.

10. Segel nach Anspruch 9, das aus einem Flugsegel besteht.

11. Gleitschirm, einen Anströmrand umfassend, der aus einem Verbundmaterial nach einem beliebigen der Ansprüche 1 bis 8 besteht, und/oder Innentrennwände umfassend, die aus einem Verbundmaterial nach einem beliebigen der Ansprüche 1 bis 8 bestehen.

12. Gleitschirm, eine Anströmrand umfassend, der aus einem Verbundmaterial nach beliebigen der Ansprüche 1 bis 8 besteht und abgespannte Innentrennwände umfasst, die aus einem Verbundmaterial nach einem beliebigen der Ansprüche 1 bis 8 bestehen.

13. Segel nach einem der Ansprüche 9 bis 12, abgespannte Trennwände umfassend, die aus einem Verbundmaterial hergestellt sind, und 2 bis 4 Abspannfäden pro abgespannter Trennwand, vorzugsweise 2 oder 3, umfassend.

14. Segel nach einem der Ansprüche 9 bis 13, eine Außenseite und/oder eine Innenseite umfassend, die teilweise oder vollständig aus einer PU-Folie gebildet sind.

15. Segel nach einem der Ansprüche 9 bis 14, Verbundmaterialabschnitte umfassend, die ein Verstärkungsgewebe aufweisen, das Verbindungszonen durch Nähen und/oder Befestigungszonen für Abspannungen bildet.

## Claims

1. Composite comprising two polyurethane (PU) films, identical or different, which are collected to one another and between which a reinforcement mesh and at least one textile reinforcement thread oriented according to at least one predetermined stress line is inserted.

2. Composite according to claim 1, wherein the polyurethane is an aromatic or aliphatic polyether-based polyurethane.

3. Composite according to claim 1, wherein the polyurethane is an aliphatic polyester-based polyurethane.

4. Composite according to any one of the previous claims, wherein the PU films are collected to one another by welding.

5. Composite according to any one of the precious claims, wherein the PU films are connected to one another by lamination.

6. Composite according to any one of the previous claims, wherein the mesh has a mesh opening ranging from 2 to 20 mm, preferably from 4 to 1 mm.

7. Composite according to any one of the previous claims, wherein a reinforcement fabric is placed inside the composite and arranged with respect to a portion of the composite.

8. Composite according to the previous claim, wherein the fabric is laminated to the interior of the composite by a PU adhesive.

9. Sail comprising at least one composite according to any one of the previous claims.

10. Sail according to claim 9, consisting of a flying sail.

11. Paraglide sail comprising a leading edge consisting of a composite according to any one of claims 1 to 8, and/or comprising internal partitions consisting of a composite according to any one of claims 1 to 8.

12. Paraglide sail comprising a leading edge consisting of a composite according to any one of claims I to 8, and comprising suspended internal partitions consisting of a composite according to any one of claims 1 to 8.

13. Sail according to any one of claims 9 to 12, including suspender partitions made of a composite and comprising between 2 and 4 suspension lines per suspended partition, and preferably 2 or 3.

14. Sail according to any one of claims 9 to 13, comprising upper portion and/or a lower portion formed entirely or artially by a PU film.

15. Sail according to any one of claims 9 to 14, comprising composite swatches comprising reinforcement fabric forming areas connected by sewing and/or areas for attachment of suspension lines.
